# EUROPÄISCHE PATENTSCHRIFT

(11) **EP 0 935 743 B1**
(45) Veröffentlichungstag und Bekanntmachung des Hinweises auf die Patenterteilung: **26.02.2003**
(21) Anmeldenummer: 98933460.2
(22) Anmeldetag: 05.05.1998
(51) Int. Cl.: G01L 9/06

(54) **DRUCKSENSOREINHEIT, INSBESONDERE FÜR DIE KRAFTFAHRZEUGTECHNIK**
PRESSURE SENSOR UNIT, ESPECIALLY FOR AUTOMOTIVE ENGINEERING APPLICATIONS
UNITE CAPTEUR DE PRESSION, EN PARTICULIER POUR LA TECHNOLOGIE AUTOMOBILE

(30) Priorität: 05.06.1997 DE 19723615
(43) Veröffentlichungstag der Anmeldung: 18.08.1999
(73) Patentinhaber: TRW Automotive Electronics & Components GmbH & Co. KG, 78315 Radolfzell (DE)
(72) Erfinder: PROBST, Uwe, D-78256 Stei lingen (DE); SKOFLJANEC, Robert, D-78345 Bankholzen (DE)
(74) Vertreter: Eder, Thomas, Dr.-Ing.
(86) Internationale Anmeldenummer: DE9801259
(87) Internationale Veröffentlichungsnummer: WO98055845

(56) Entgegenhaltungen:
- EP-A- 0 677 727
- DE-A- 19 507 143
- DE-U- 29 506 494
- PATENT ABSTRACTS OF JAPAN vol. 10, no. 387 (P-530) [2444], 25. Dezember 1986 & JP 61 175537 A (HITACHI LTD), 7. August 1986

## Beschreibung

Die Erfindung betrifft eine Drucksensoreinheit, insbesondere für die Kraftfahrzeugtechnik, mit den Merkmalen des Oberbegriffs des Patentanspruchs 1. Drucksensoreinheiten sind in vielfältigen Ausführungen bekannt und finden in der Kraftfahrzeugtechnik beispielsweise als Sensorelemente zur Überwachung des Öldrucks von Motoren oder des Bremsdrucks Verwendung.

Derartige Drucksensoreinheiten umfassen in der Regel ein Gehäuse mit einer Zuführöffnung für das Druckmedium, dessen Druck zu überwachen ist. Das Druckmedium wird über die Zuführöffnung einer im Gehäuse aufgenommenen Druckmesszelle zugeführt. Das Gehäuse der Drucksensoreinheit kann beispielsweise in einem vorderen Bereich ein Außengewinde aufweisen, welches für das Einschrauben der Drucksensoreinheit in eine entsprechende Ausnehmung mit einem Innengewinde in dem zu überwachenden System, beispielsweise dem Motorblock, dient.

Da insbesondere in der Kraftfahrzeugtechnik eine hohe Langzeitstabilität bei gleichzeitiger Resistenz gegen aggressive Medien und rauhe Umgebungsbedingungen gefordert wird, finden hier überwiegend sogenannte mediengetrennte Drucksensoreinheiten Verwendung, bei denen das Druckmedium, dessen Druck zu überwachen ist, nicht mit dem eigentlichen Sensorelement in Berührung kommt. Hierzu ist es bekannt, das Sensorelement in einem Messzellengehäuse einer Druckmesszelle anzuordnen und die Druckmesszelle im Gehäuse der Sensoreinheit mittels einer Trennmembran gegenüber der Zuführöffnung abzudichten. Das Druckmedium beaufschlagt dabei über die Trennmembran ein auf der anderen Seite der Trennmembran zwischen Trennmembran und Sensorelement eingebrachtes Druckübertragungsmedium. Eine derartige Drucksensoreinheit ist beispielsweise aus der DE 295 11 976 U1 bekannt, wobei diese zusätzlich als Referenzdruck-Messanordnung ausgebildet ist.

Nachteilig bei dieser bekannten Drucksensoreinheit ist jedoch, dass die Montage der eigentlichen Druckmesszelle, bestehend aus einem oder mehreren Gehäuseteilen und dem darin angeordneten Sensorelement, relativ aufwendig ist. Hierzu trägt insbesondere die Montage des Drucksensorelements auf dem betreffenden Trägerteil und die Kontaktierung der Anschlüsse des Sensorelements bei.

Da das Sensorelement immer vom zu messenden Druck beaufschlagt werden muss, ist es erforderlich, die Anschlüsse des Drucksensors an der dem Beaufschlagungsmedium abgewandten Seite des Trägerteils herauszuführen. Erschwert wird dies bei bekannten Drucksensoreinheiten dadurch, dass das Trägerteil regelmäßig aus einem Metall besteht, um die bei hohen Drücken erzeugten hohen Druckkräfte aufzunehmen und auf das Gehäuse der Drucksensoreinheit zu übertragen. In diesen Fällen ist es erforderlich, die Sensoranschlusskontakte isoliert durch das Trägerelement an dessen Rückseite herauszuführen, was mit einem entsprechenden Aufwand verbunden ist (z.B. DE 295 11 976 U1).

Die Anmelderin hat deshalb bereits eine Drucksensoreinheit entwickelt, die in der älteren, nicht vorveröffentlichten deutschen Patentanmeldung 196 37 763 beschrieben ist. Diese Drucksensoreinheit weist eine Messzelle auf, deren Messzellengehäuse in dem Gehäuse der Drucksensoreinheit gehalten ist. Das Messzellengehäuse weist einen zentralen Durchbruch auf, von dessen Rückseite her ein in einem TO-Gehäuse angeordnetes Drucksensorelement eingesetzt wird. Das TO-Gehäuse kann dann beispielsweise durch Verschweißen mit dem Messzellengehäuse dicht verbunden werden. Durch den Einsatz des TO-Gehäuses kann das eigentliche Sensorelement bereits fertig vorkontaktiert in das Messzellengehäuse eingesetzt und mit diesem verbunden werden. Gegenüber bekannten Sensoreinheiten wurde hierdurch bereits der Vorteil einer einfacheren Montage erreicht.

Nachteilig ist jedoch der Aufwand, der durch das Einsetzen des eigentlichen Sensorelements in das TO-Gehäuse bedingt ist sowie das feste und dichte Verbinden des TO-Gehäuses mit dem Messzellengehäuse.

Der vorliegenden Erfindung liegt daher die Aufgabe zugrunde, eine Drucksensoreinheit, insbesondere für die Kraftfahrzeugtechnik, zu schaffen, welche mit geringem Aufwand und damit kostengünstig herstellbar ist und die dennoch zur Anwendung für höhere Drücke geeignet ist.

Die Erfindung löst diese Aufgabe mit den Merkmalen des Patentanspruchs 1. Durch das Umspritzen wenigstens zweier elektrischer Leiter, welche zur Kontaktierung des Sensorelements erforderlich sind, zu einem Messzellengehäuse ergibt sich der Vorteil eines sehr geringen Aufwands bei der Herstellung der Messzelle bzw. der Drucksensoreinheit.

Das eigentliche Sensorelement, welches beispielsweise auf einem Halbleiterchip ausgebildet ist, kann direkt auf bzw. in dem Messzellengehäuse angeordnet werden. Die elektrischen Anschlüsse des Drucksensors können beispielsweise durch Bonden mit den Kontaktenden der elektrischen Leiter verbunden werden, welche auf derjenigen Seite des Messzellengehäuses herausragen, die von dem Druckmedium bzw. Druckübertragungsmedium beaufschlagt wird.

Damit kann die Messzelle auf einfache Weise und mit geringem Aufwand hergestellt und ebenso einfach in dem Gehäuse der Drucksensoreinheit montiert werden.

Um eine Eignung der Drucksensoreinheit für hohe zu messende Drücke zu erreichen, ist an der Rückseite des Messzellengehäuses eine Versteifungsplatte vorgesehen. Diese Versteifungsplatte kann Durchbrüche zur Durchführung der Anschlusskontakte des Sensors aufweisen und auch an das Messzellengehäuse angespritzt oder in dieses eingespritzt sein.

Bei der bevorzugten Ausführungsform der Erfindung sind die elektrischen Leiter als Stanzgitter ausgebildet, welches vor bzw. während des Umspritzvorgangs in die gewünschte Form gebogen wird.

Bei der bevorzugten Ausführungsform der Erfindung ist das Stanzgitter so ausgebildet, dass die betreffenden Kontaktenden durch Bonden mit den betreffenden Anschlüssen des Drucksensors verbindbar sind. Dies setzt voraus, dass die Anschlusskontaktenden der Stanzgitter poliert sind oder zumindest polierte Bereiche aufweisen. Des Weiteren muss während des gesamten Herstellungsprozesses dafür Sorge getragen werden, dass diese Bereiche nicht verschmutzt werden. Insbesondere muss dabei für den Spritzvorgang auf ein Trennmittel verzichtet werden. Gegebenenfalls sind daher stärkere Schrägen erforderlich, um das Ausformen des Spritzteils zu erleichtern.

Die Kontaktenden der elektrischen Leiter, die auf der der Druckseite abgewandten Seite des Messzellengehäuses herausragen, können gleichzeitig als mechanische Halterungen für die elektronische Schaltung oder den elektronischen Schaltkreis zur Auswertung bzw. Verarbeitung der Sensorsignale dienen, d.h. gleichzeitig die Funktion von Kontakt- und Trägerelementen übernehmen. Das Messzellengehäuse kann hierzu so gestaltet sein, dass die montierte und kontaktierte elektronische Schaltung bzw. der elektronische Schaltkreis in einer Ausnehmung im Messzellengehäuse aufgenommen ist.

Das Kontaktieren der Sensoranschlüsse zur elektronischen Schaltung bzw. zum elektronischen Schaltkreis kann derart erfolgen, dass die betreffenden Kontaktenden der elektrischen Leiter als ein Elemente entsprechender Steck- oder Schneidkontakte ausgebildet sind, welche jeweils mit weiteren, die Steck- oder Schneidkontakte bildenden, an der elektronischen Schaltung oder dem elektronischen Schaltkreis vorgesehenen Gegenelementen zusammenwirken.

Bei der bevorzugten Ausführungsform der Erfindung ist der vorzugsweise als Chip ausgebildete Drucksensor direkt auf einer Innenwandung der Ausnehmung des Messzellengehäuses aufgeklebt. Hierdurch ergibt sich ein extrem einfacher Aufbau der Druckmesszelle. Nach einer weiteren Ausführungsform der Erfindung, beispielsweise für extrem temperaturstabile Drucksensoreinheiten, kann der Drucksensor auf der Oberfläche eines am bzw. im Messzellengehäuse vorgesehenen steifen Elements, vorzugsweise aus Keramik, angeordnet sein. Hierdurch werden, insbesondere durch Temperaturänderungen erzeugte, im Messzellengehäuse bestehende Spannungen nicht auf das empfindliche Sensorelement übertragen. Messfehler oder gar die Zerstörung des Sensorelements werden somit sicher vermieden.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine Ausführungsform einer erfindungsgemäßen Drucksensoreinheit, insbesondere für hohe Drücke, in Schnittdarstellung;
- Fig. 2: eine perspektivische Ansicht des unteren Gehäuseteils einer weiteren Drucksensoreinheit, die nicht vom Schutzumfang des Patents erfasst ist, und
- Fig. 3: eine Ausführungsform einer Drucksensoreinheit, die nicht vom Schutzumfang des Patents umfasst ist.

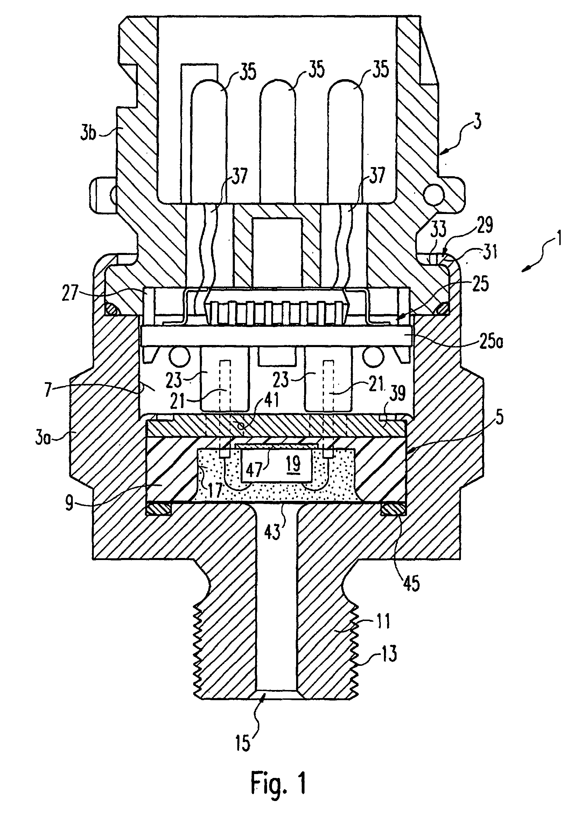

Die in Fig. 1 dargestellte erste Ausführungsform einer Drucksensoreinheit 1 besteht aus einem zweiteiligen Gehäuse 3, in welchem eine Druckmesszelle 5 angeordnet ist. Das Gehäuse 3 kann aus Metall oder einem hochfesten Kunststoff bestehen.

Die Druckmesszelle 5 ist in einem unteren, ersten Gehäuseteil 3a montiert, welches hierzu eine Ausnehmung 7 aufweist. Die Ausnehmung 7 kann beispielsweise in Form einer Bohrung ausgebildet sein, welche zumindest in ihrem unteren Teil einen Innendurchmesser aufweist, der im Wesentlichen dem Außendurchmesser des vorzugsweise scheibenförmig ausgebildeten Messzellengehäuses 9 entspricht.

Dieses erste Gehäuseteil 3a weist in seinem unteren Bereich einen im Wesentlichen kreiszylindrischen Fortsatz 11 auf, welcher mittels eines daran vorgesehenen Außengewindes 13 in eine entsprechende Gewindebohrung am Montageort, beispielsweise in einem Zylinder eines Brennsystems oder im Motorblock, einschraubbar ist.

Für das Zuführen des Druckmediums, dessen Druck zu erfassen ist, ist ausgehend von der Stirnfläche des Fortsatzes 11 des ersten Gehäuseteils 3a eine Zuführöffnung 15 vorgesehen, durch welche das Druckmedium an die Druckmesszelle herangeführt wird.

Die Druckmesszelle weist in ihrem Messzellengehäuse 9 eine Ausnehmung 17 auf, in welcher der eigentliche Drucksensor 19 angeordnet ist. Dieser kann beispielsweise als Siliziummembran mit integrierten piezoresistiven Halbleiterwiderständen ausgebildet sein.

Das Messzellengehäuse 9 besteht erfindungsgemäß aus einem Kunststoffspritzteil, in welches zumindest zwei elektrische Leiter 21 eingespritzt sind. Hierdurch ergibt sich der Vorteil, dass die elektrischen Leiter 21, die vorzugsweise als entsprechend gebogene Stanzgitter ausgebildet sind, auf einfache Weise dicht und elektrisch isoliert durch das Messzellengehäuse 9 auf der dem Beaufschlagungsdruck abgewandten Seite des Messzellengehäuses herausgeführt sind.

Das Kontaktieren der auf der druckabgewandten Seite des Messzellengehäuses 9 herausgeführten Kontaktenden kann in einfacher Weise dadurch erfolgen, dass diese als Schneidkontakte ausgebildet sind, welche mit Anschlussfahnen 23 einer e lektronischen Schaltung 25 zusammenwirken.

Die elektronische Schaltung 25 ist bei dem in Fig. 1 dargestellten Ausführungsbeispiel im oberen, zweiten Gehäuseteil 3b des Gehäuses 3 gehalten. Hierzu ist die Platine 25a der elektronischen Schaltung 25 mit seitlichen Ausnehmungen ausgestattet, in welche Haltearme 27 eingreifen, die mit dem oberen Gehäuseteil 3b des Gehäuses 3 verbunden sind. Das Herstellen der elektrischen Verbindung zwischen den Anschlussfahnen 23 der elektronischen Schaltung 25 und den betreffenden Kontaktenden der elektrischen Leiter bzw. Stanzgitter 21 erfolgt dann einfach durch das Ineinanderschieben der beiden Gehäuseteile 3a und 3b. Hierzu kann das untere Gehäuseteil 3a, wie in Fig. 1 dargestellt, einen Aufnahmebereich 29 mit einer Schulter als Anschlag für die Stirnseite des oberen Gehäuseteils 3b aufweisen sowie eine obere Gehäusewandung 31, die nach dem Aufschieben des oberen Gehäuseteils 3b auf das untere Gehäuseteil 3a über eine Schulter 33 an der Unterseite des oberen Gehäuseteils 3b hinausragt. Diese kann dann nach dem Zusammenschieben der beiden Gehäuseteile 3a, 3b zur festen Verbindung der Gehäuseteile 3a, 3b umgebördelt werden.

Im dem oberen Gehäuseteil 3b sind in einem Steckeranschlussbereich äußere Anschlusskontakte 35 vorgesehen, über welche die Drucksensoreinheit 1 mittels eines nicht dargestellten Stecker kontaktiert werden kann. Die Anschlusskontakte 35 können beispielsweise mittels Anschlussleitungen 37 mit der im oberen Gehäuseteil 3b gehaltenen elektronischen Schaltung 25 verbunden sein. Selbstverständlich können jedoch auch zur Kontaktierung der äußeren Anschlusskontakte 35 mit der elektronischen Schaltung 25 Steckverbindungen Verwendung finden.

Bei der in Fig. 1 dargestellten Ausführungsform umfasst das Messzellengehäuse 9 zusätzlich ein an seiner druckabgewandten Rückseite vorgesehenes Versteifungselement 39. Dieses kann beispielsweise in Form einer Metallplatte realisiert sein, die Durchbrüche 41 aufweist, durch welche die Kontaktenden der elektrischen Leiter bzw. Stanzgitter 21 hindurchgeführt sind.
Das Versteifungselement 39 kann bei der Montage der Drucksensoreinheit als lose Scheibe auf das Kunststoffspritzteil des Messzellengehäuses 9 aufgelegt werden oder aber bereits an das Kunststoffspritzteil angespritzt oder in dieses eingespritzt sein.

Zur Montage der Druckmesszelle 5 im Gehäuse 3 wird zunächst die Ausnehmung 17 mit einem Druckübertragungsmedium gefüllt, da es sich bei dem in Fig. 1 dargestellten Ausführungsbeispiel um eine mediengetrennte Drucksensoreinheit handelt. Nach dem Füllen der Ausnehmung 17 wird das Messzellengehäuse 9 zusammen mit einer Trennmembran 43 in die Ausnehmung 7 des unteren Gehäuseteils 3a eingesetzt. In Verbindung mit dem in einer Umfangsnut vorgesehenen Dichtring 45 ergibt sich durch das Anpressen des Messzellengehäuses 9 an die Bodenseite der Ausnehmung 7 ein dichter Abschluss, so dass das Druckübertragungsmedium nicht aus dem durch die Ausnehmung 17 und die Trennmembran 43 gebildeten Raum austreten kann.

Wie in Fig. 1 dargestellt, kann das Fixieren der Messzelle 5 dadurch erfolgen, dass mittels eines Schälvorgangs ein oder mehrere Bereiche oder ein umlaufender Bereich der seitlichen Innenwandung der Ausnehmung 7 in eine das Messzellengehäuse hintergreifende Stellung gebracht werden. Auf diese Weise kann während und mittels des Montageprozesses ein entsprechender Druck auf das Messzel lengehäuse 9 erzeugt werden, der auch nach Beendigung des Schälprozesses im Wesentlichen erhalten bleibt.

Anstelle eines Schälprozesses kann das Messzellengehäuse 9 auch durch das Verjüngen des vorzugsweise aus Metall bestehenden Gehäuseteils 3a fixiert werden. Hierzu wird das Gehäuseteil 3a oberhalb des oberen Endes des eingesetzten Messzellengehäuses im Wesentlichen radial gequetscht.

Wie aus Fig. 1 ersichtlich, kann der eigentliche Drucksensor 19 an der Innenwandung der Ausnehmung 17 im Messzellengehäuse 9 auf einem Entkoppelelement 47 angeordnet sein, das beispielsweise in Form eines Keramikplättchens realisiert sein kann. Das Keramikplättchen 47 kann seinerseits entweder auf die Innenseite der Ausnehmung 17 aufgeklebt sein oder bereits in das Kunststoffspritzteil des Messzellengehäuses 9 mit eingespritzt sein. Durch die Verwendung eines derartigen Entkoppelelements wird das Übertragen von Spannungen auf den empfindlichen Sensor 19 verhindert, die beispielsweise durch Temperaturänderungen oder durch den Montagevorgang im Messzellengehäuse 9 entstehen können.

Gegebenenfalls kann jedoch durch die Verwendung geeigneter Kunststoffe oder Mischmaterialien auf ein derartiges Entkoppelelement 47 verzichtet werden.

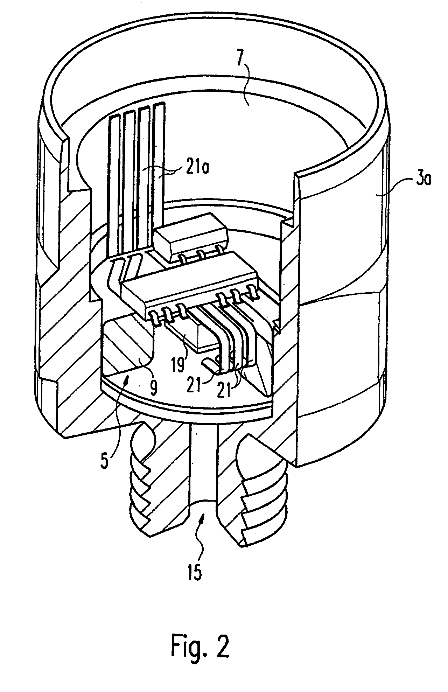

Während sich die in Fig. 1 dargestellte Drucksensoreinheit insbesondere zur Messung hoher Drücke eignet, kann das in Fig. 2 dargestellte Ausführungsbeispiel, das deutlich einfacher aufgebaut ist, für niedrigere und mittlere Drücke eingesetzt werden.

Fig. 2 zeigt lediglich das untere Gehäuseteil 3a des Gehäuses 3 des Ausführungsbeispiels in einer teilweise aufgebrochenen perspektivischen Ansicht.

Auf dem Boden der Ausnehmung 7 des unteren Gehäuseteils 3a ist die Messzelle 5 eingesetzt, welche grundsätzlich der in Fig. 1 dargestellten Messzelle entspricht. Allerdings kann bei dem in Fig. 2 dargestellten Ausführungsbeispiel, welches für niedrige und mittlere Drücke einsetzbar ist, auf die Versteifungsplatte 39 verzichtet werden. Der Schutzumfang des Patents erstreckt sich jedoch nicht auf Ausführungsformen ohne Versteifungsplatte.

Das Messzellengehäuse 9 besteht wiederum aus einem Kunststoffspritzteil, in welches elektrische Leiter 21 eingespritzt sind. Bei dieser Ausführungsform sind die elektrischen Leiter 21, welche wiederum als Stanzgitter ausgebildet sein können, so beschaffen, dass diese an der druckabgewandten Seite des Messzellengehäuses 9 so herausgeführt sind, dass das Messzellengehäuse 9 gleichzeitig die Funktion einer elektrischen Leiterplatte mit übernimmt.

Bei dieser Ausbildung der elektrischen Leiter 21 können elektronische Bauelemente, beispielsweise integrierte Schaltkreise, insbesondere ASIC's direkt auf die elektrischen Leiter 21 aufgelötet werden.

Die Kontaktierung der elektronischen Bauelemente zu den im nicht dargestellten oberen Gehäuseteil angeordneten äußeren Anschlusskontakten erfolgt mittels der Anschlusskontaktenden 21a, die sich vertikal vom Messzellengehäuse 9 in Richtung des oberen Gehäuseteils erstrecken. Zur Kontaktierung der Kontaktenden 21a können sich vom oberen Gehäuseteil entsprechende Gegenkontakte nach unten erstrecken.

Selbstverständlich kann das Anordnen der elektronischen Schaltkreise bzw. der elektronischen Schaltung das Kontaktieren des Sensors 19 bzw. der äußeren Anschlusskontakte 35, das vorstehend jeweils nur für das betreffende Ausführungsbeispiel dargestellt ist, auch jeweils auf das andere Ausführungsbeispiel übertragen werden.

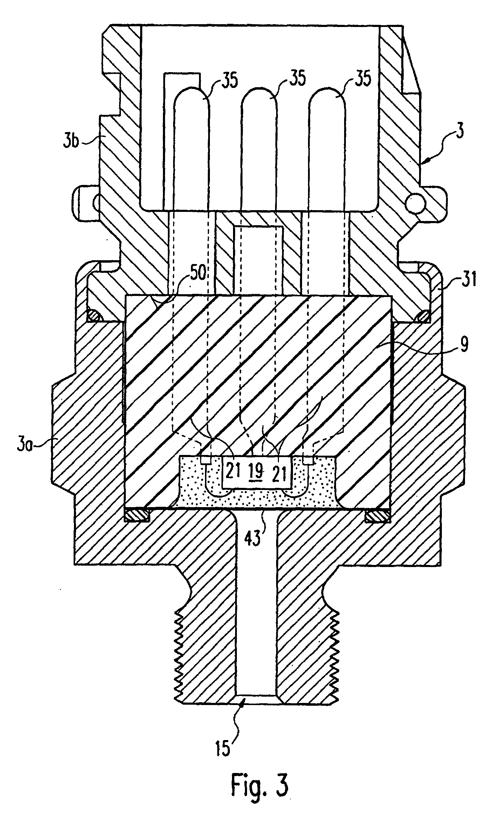

Fig. 3 zeigt eine weitere Ausführungsform, welche insbesondere für niedrige und mittlere Drücke geeignet ist, bei der das Messzellengehäuse 9 an seiner Oberseite von der sich radial einwärts erstreckenden Schulter 50 des oberen Gehäuseteils 3b beaufschlagt wird. Durch das Zusammensetzen der beiden Gehäuseteile 3a, 3b und das Umbördeln der Wandung 31 des unteren Gehäuseteils 3a wird somit ein Fixieren der Messzelle 5 im Gehäuse erreicht. Hierdurch ergibt sich ein weiter reduzierter Herstellungs- und Montageaufwand.

Diese Maßnahme lässt sich selbstverständlich auch mit herkömmlich aufgebauten Messzellen zum Aufbau einer Sensoreinheit einsetzen.

Des weiteren ist bei dieser Ausführungsform auf zum Sensor 19 zusätzliche elektrische oder elektronische Bauelemente verzichtet. Beispielsweise kann die gesamte erforderliche Elektronik in dem Sensor 21 integriert sein oder die Signalauswertung außerhalb der Sensoreinheit erfolgen. Die im Messzellengehäuse 9 eingespritzten Leiter 21 können daher einstückig mit den Anschlusskontakten 35 ausgebildet sein, bzw. die Enden der Leiter 21 können an der Oberseite des Messzellengehäuses 9 als Anschlusskontakte 35 herausgeführt sein. Auch durch diese Maßnahme wird der Herstellungs- und Montageaufwand weiter reduziert.

Sind dennoch weitere elektrische oder elektronische Bauelemente erforderlich, so können die Anschlusskontakte 35 auch mit in das Messzellengehäuse 9 eingespritzt sein und wie die Leiter 21 auch gleichzeitig als mechanische Halterungen für die Bauelemente dienen.

In einer nicht dargestellten Ausführungsform kann auch das obere Gehäuseteil 3b mit dem Messzellengehäuse 9 einstückig ausgebildet sein, so dass für den Aufbau der Sensoreinheit - abgesehen vom Sensor - lediglich zwei Teile zu montieren sind.

Insgesamt wird durch das Verwenden eines Kunststoffspritzteils zumindest als wesentlicher Bestandteil des Messzellengehäuses 9, in welches bereits die elektrischen Kontakte zur Kontaktierung des Sensors eingespritzt sind, im Vergleich zu bekannten Drucksensoreinheiten eine deutliche Vereinfachung sowohl bei der Herstellung der Druckmesszelle als auch bei deren Montage im Gehäuse der Drucksensoreinheit erreicht.

Die in Bezug auf die einzelnen Ausführungsformen beschriebenen Merkmale lassen sich in sinnvoller Weise selbstverständlich auch zu weiteren Ausführungsformen kombinieren.

## Patentansprüche

1. Drucksensoreinheit, insbesondere für die Kraftfahrzeugtechnik,
a) mit einem Gehäuse (3), in welchem eine Druckmesszelle (5) angeordnet ist, der über eine Zuführöffnung (15) des Gehäuses ein Druckmedium zuführbar ist, und welches vom Gehäuseinneren nach außen geführte äußere Anschlusskontakte (35) aufweist,
b) wobei die Druckmesszelle (5) ein Messzellengehäuse (9) umfasst, in oder an welchem ein Drucksensor (19) angeordnet ist, der von einem Druckmedium beaufschlagbar ist, und
c) wobei die elektrischen Anschlüsse des Drucksensors (19) mit den äußeren Anschlusskontakten (35) oder Anschlüssen (23) einer elektronischen Schaltung (25) oder eines elektronischen Schaltkreises verbunden sind,
**dadurch gekennzeichnet,**
c) dass das Messzellengehäuse (9) ein Kunststoffspritzteil ist, in welches wenigstens zwei elektrische Leiter (21) eingespritzt sind,
d) wobei die elektrischen Leiter (21) jeweils mit zumindest einem ersten Kontaktende in einen Bereich zur Aufnahme des Drucksensors (19) ragen und mit jeweils einem elektrischen Anschluss des Drucksensors (19) verbunden sind und
e) wobei die elektrischen Leiter (21) mit jeweils zumindest einem zweiten Kontaktende in einen nicht vom Druckmedium oder Druckübertragungsmedium beaufschlagten Bereich des Messzellengehäuses ragen und mit den äußeren Anschlusskontakten (35) oder den Anschlüssen (23) der elektronischen Schaltung oder des elektronischen Schaltkreises verbunden sind und
f) dass an der bezüglich der Druckbeaufschlagungsrichtung rückwärtigen Seite des Messzellengehäuses (9) eine im Gehäuse (3) fixierte Versteifungsplatte (39), vorzugsweise aus Metall, vorgesehen ist.

2. Drucksensoreinheit nach Anspruch 1, **dadurch gekennzeichnet, dass** die elektrischen Leiter (21) als Stanzgitter ausgebildet sind.

3. Drucksensoreinheit nach Anspruch 1 oder 2, **dadurch gekennzeichnet, dass** der Drucksensor (19) auf einem Halbleiterchip ausgebildet ist.

4. Drucksensoreinheit nach Anspruch 3, **dadurch gekennzeichnet, dass** auf dem Halbleiterchip auch zumindest ein Teil einer Verarbeitungs- und Auswerteelektronik angeordnet ist.

5. Drucksensoreinheit nach einem der Ansprüche 2 bis 4, **dadurch gekennzeichnet, dass** das zumindest eine erste Kontaktende der Stanzgitter durch Bonden mit dem betreffenden Anschluss des Drucksensors (19) verbunden ist.

6. Drucksensoreinheit nach einem der vorhergehenden Ansprüche, **dadurch gekennzeichnet, dass** die zweiten Kontaktenden der elektrischen Leiter (21) als mechanische Halterungen für die elektronische Schaltung (25) oder den elektronischen Schaltkreis ausgebildet sind.

7. Drucksensoreinheit nach einem der vorhergehenden Ansprüche, **dadurch gekennzeichnet, dass** die zweiten Kontaktenden der elektrischen Leiter (21) als ein Element eines Steck- oder Schneidkontakts ausgebildet sind, welches mit einem weiteren, den Steck- oder Schneidkontakt bildenden, an der elektronischen Schaltung (25) oder dem elektronischen Schaltkreis vorgesehenen Gegenelement (23) zusammenwirkt.

8. Drucksensoreinheit nach einem der vorhergehenden Ansprüche, **dadurch gekennzeichnet, dass** der Drucksensor (19) direkt auf einer Wandung des Messzellengehäuses (9) aufgeklebt ist.

9. Drucksensoreinheit nach einem der Ansprüche 1 bis 8, **dadurch gekennzeichnet, dass** der Drucksensor (19) auf der Oberfläche eines am oder im Messzellengehäuse vorgesehenen Entkoppelelements (47), vorzugsweise aus Keramik, angeordnet ist.

10. Drucksensoreinheit nach Anspruch 9, **dadurch gekennzeichnet, dass** das Entkoppelelement (47) in das Messzellengehäuse (9) eingespritzt ist.

11. Drucksensoreinheit nach Anspruch 10, **dadurch gekennzeichnet, dass** die Versteifungsplatte (39) an das Messzellengehäuse (9) angespritzt oder in dieses eingespritzt ist.

## Claims

1. Pressure sensor unit, in particular for motor vehicle engineering,
a) having a housing (3), in which a pressure measuring cell (5) to which a pressure medium can be fed via a feed opening (15) in the housing is arranged, and which housing (3) has external connecting contacts (35) which lead to the outside from the interior of the housing,
b) the pressure measuring cell (5) comprising a measuring cell housing (9) in or on which a pressure sensor (19) to which a pressure medium can be applied is arranged, and
c) the electrical terminals of the pressure sensor (19) being connected to the external connecting contacts (35) or terminals (23) of an electronic circuitry (25) or of an electronic circuit,
**characterized**
c) in that the measuring cell housing (9) is a plastic injection-moulded part in which at least two electrical conductors (21) are embedded by means of injection moulding,
d) the electrical conductors (21) each projecting with at least one first contact end into a region for receiving the pressure sensor (19) and being connected to in each case one electrical terminal of the pressure sensor (19), and
e) the electrical conductors (21) projecting with in each case at least one second contact end into a region of the measuring cell housing to which pressure medium or pressure transmission medium is not applied and being connected to the external connecting contacts (35) or to the terminals (23) of the electronic circuitry or of the electronic circuit, and
f) in that a reinforcement plate (39), preferably made of metal, which is secured in the housing (3) is provided on the side of the measuring cell housing (9) which is to the rear with respect to the direction in which pressure is applied.

2. Pressure sensor unit according to Claim 1, **characterized in that** the electrical conductors (21) are embodied as punched grilles.

3. Pressure sensor unit according to Claim 1 or 2, **characterized in that** the pressure sensor (19) is formed on a semiconductor chip.

4. Pressure sensor unit according to Claim 3, **characterized in that** at least part of a processing and evaluation electronic system is also arranged on the semiconductor chip.

5. Pressure sensor unit according to one of Claims 2 to 4, **characterized in that** the at least one first contact end of the punched grilles is connected to the respective terminal of the pressure sensor (19) by means of bonding.

6. Pressure sensor unit according to one of the preceding claims, **characterized in that** the second contact ends of the electrical conductors (21) are embodied as mechanical mounts for the electronic circuitry (25) or the electronic circuit.

7. Pressure sensor unit according to one of the preceding claims, **characterized in that** the second contact ends of the electrical conductors (21) are embodied as an element of a plug-in contact or an insulation piercing connecting contact, which element interacts with a further corresponding element (23) which forms the plug-in contact or insulation piercing connecting contact and is provided on the electronic circuitry (25) or the electronic circuit.

8. Pressure sensor unit according to one of the preceding claims, **characterized in that** the pressure sensor (19) is bonded directly onto a wall of the measuring cell housing (9).

9. Pressure sensor unit according to one of Claims 1 to 8, **characterized in that** the pressure sensor (19) is arranged on the surface of an isolating element (47), preferably made of ceramic, which is provided on or in the measuring cell housing.

10. Pressure sensor unit according to Claim 9, **characterized in that** the isolating element (47) is embedded in the measuring cell housing (9) by means of injection moulding.

11. Pressure sensor unit according to Claim 10, **characterized in that** the reinforcement plate (39) is attached to the measuring cell housing (9) by means of injection moulding or embedded therein by means of injection moulding.

## Revendications

1. Unité capteur de pression, en particulier pour la technologie automobile,
a) comportant un boîtier (3) dans lequel est agencée une cellule de mesure de pression (5) accessible à un fluide sous pression via une ouverture d'alimentation (15) du boîtier, et qui comprend des contacts de raccordement extérieurs (35) menés depuis l'intérieur du boîtier vers l'extérieur,
b) dans laquelle la cellule de mesure de pression (5) comprend un boîtier de cellule de mesure (9) dans ou sur lequel est agencé un capteur de pression (19) susceptible d'être sollicité par un fluide sous pression, et
c) dans laquelle les raccords électriques du capteur de pression (19) sont connectés avec les contacts de raccordement extérieurs (35) ou avec des raccords (23) d'un circuit électronique (25) ou d'un circuit de commutation électronique,
**caractérisée en ce que**
c) le boîtier de cellule de mesure (9) est une pièce injectée en matière synthétique dans laquelle sont surmoulés au moins deux conducteurs électriques (21),
d) les conducteurs électriques (21) pénètrent chacun par au moins une première extrémité de contact dans une zone de réception du capteur de pression (19) et sont reliés chacun à un raccord électrique respectif du capteur de pression (19), et
e) les conducteurs électriques (21) pénètrent chacun par au moins une deuxième extrémité de contact dans une zone du boîtier de cellule de mesure, qui n'est pas alimentée en fluide sous pression ou en agent transmetteur de pression, et sont reliés aux contacts de raccord extérieurs (35) ou aux raccords (23) du circuit électronique ou du circuit de commutation électronique, et
f) **en ce qu'**il est prévu, sur le côté arrière du boîtier de cellule de mesure (9) par rapport à la direction d'alimentation en pression, une plaque de rigidification (39), de préférence métallique, fixée dans le boîtier (3).

2. Unité capteur de pression selon la revendication 1, **caractérisée en ce que** les conducteurs électriques (21) sont réalisés sous forme de grilles poinçonnées.

3. Unité capteur de pression selon l'une ou l'autre des revendications 1 et 2, **caractérisée en ce que** le capteur de pression (19) est réalisé sur une plaquette semi-conductrice.

4. Unité capteur de pression selon la revendication 3, **caractérisée en ce que** sur la plaquette semi-conductrice est agencée également une partie au moins d'une unité électronique de traitement et d'évaluation.

5. Unité capteur de pression selon l'une des revendications 2 à 4, **caractérisée en ce qu'**une première extrémité de contact au moins des grilles poinçonnées est reliée par bonding au raccord correspondant du capteur de pression (19).

6. Unité capteur de pression selon l'une des revendications précédentes, **caractérisée en ce que** les deuxièmes extrémités de contact des conducteurs électriques (21) sont réalisées sous forme de montures mécaniques pour le circuit électronique (25) ou le circuit de commutation électronique.

7. Unité capteur de pression selon l'une des revendications précédentes, **caractérisée en ce que** les deuxièmes extrémités de contact des conducteurs électriques (21) sont réalisées sous la forme d'un élément d'un contact enfichable ou tranchant qui coopère avec un autre élément complémentaire (23) formant le contact enfichable ou tranchant et prévu sur le circuit électronique (25) ou le circuit de commutation électronique.

8. Unité capteur de pression selon l'une des revendications précédentes, **caractérisée en ce que** le capteur de pression (19) est collé directement sur une paroi du boîtier de cellule de mesure (9).

9. Unité capteur de pression selon l'une des revendications 1 à 8, **caractérisée en ce que** le capteur de pression (19) est agencé sur la surface d'un élément de découplage (47), de préférence en céramique, prévu sur ou dans le boîtier de cellule de mesure.

10. Unité capteur de pression selon la revendication 9, **caractérisée en ce que** l'élément de découplage (47) est surmoulé dans le boîtier de cellule de mesure (9).

11. Unité capteur de pression selon la revendication 10, **caractérisée en ce que** la plaque de rigidification (39) est agencée par injection sur ou dans le boîtier de cellule de mesure (9).
